# EUROPEAN PATENT APPLICATION

(11) **EP 2 025 496 A2**
(43) Date of publication of application: **18.02.2009**
(21) Application number: 08161990.0
(22) Date of filing: 07.08.2008
(51) Int. Cl.: B29C 47/88, B29C 55/04, B29D 7/01

(54) **Method for manufacturing uktra-thin polymeric films**

(30) Priority: 14.08.2007 US 838557
(71) Applicant: GENERAL ELECTRIC COMPANY, Schenectady, NY 12345 (US)
(72) Inventor: Silvi, Norberto, Cllifton Park, NY 12065 (US); Cao, Yang, Niskayuna, NY 12309 (US); Tan, Daniel Qi, Rexford, NY 12148 (US); Irwin, Patricia Chapman, Altamont, NY 12009 (US); Schuman, Kevin Edwin, Cohoes, NY 12047-1300 (US)
(74) Representative: Illingworth-Law, William Illingworth

(57) **Abstract**

A method for manufacturing an ultra-thin polymeric film is disclosed. The method includes the steps of melt blending of a polymeric composition or a nanocomposite composition in an extruder. Next, the molten composition is conveyed through a flat die with a small die lip gap. A melt pump may also be used to provide a constant, non-pulsating flow of the melted composition through the die. The melted composition may be passed through a filtration device to remove contaminants that could adversely affect the dielectric performance of the film. Next, the film is stretched by passing the film through take-up rollers at relatively high take-up speeds. Then, the composition is cooled to form a film or sheet. The edges of the film may be trimmed, and the film wound up on a roll using a tension-controlled winding mechanism. A heated roll may be used to temper/anneal the film, thereby eliminating frozen-in internal stresses.

## Description

### BACKGROUND

The invention relates generally to a method for preparing ultra-thin polymeric films, such as a type for use in electronic and automotive applications.

The manufacturing of polymer thin films has been traditionally performed by two methods: Solvent cast and Spin coating. These two methods produce films of uniform thickness, excellent quality and cleanliness (no gels), and are the method of choice for those polymers that, due to their molecular structure, are either too viscous or require too high a melt temperature to be processed in the melt into thin films. These two methods, however, are slow (low capacity), energy-intensive, and require the recycle and purification of large amounts of the solvent at the end of the evaporation process.

Solvent cast involves the spreading of a viscous polymer-solvent solution under pressure, by continuously forcing the solution out of a flat die, and depositing it onto a rotating, highly polished conveying belt. The solution then travels through a heated cabinet where the solvent is eliminated by the application of heat and vacuum, with only the polymer film, and a relatively low amount of residual solvent in the film, remaining. Most of the vaporized solvent is then condensed and recovered in a solvent recovery system. The ultimate thickness of the film is determined by a combination of the pressure at which the solution is forced out of the die and the speed of the rotating belt. At the end of the cycle, the film is cooled and the dried film is stripped from the band and wound up on a core.

Spin coating, on the other hand, involves the deposition of a polymer-solvent solution onto a solid surface or substrate, acceleration of the solution-surface to its final rotational speed, spinning at a (relatively high) constant rate to spread the liquid on the substrate by centrifugal action, and evaporation of the solvent to reduce the amount of solvent in the final film to the desired level. Rotational speed, polymer concentration, solvent type, and temperature are all expected to affect the thickness of the final film.

To meet these challenges, innovative techniques or modifications of the existing methods is needed.

### SUMMARY

Briefly, one aspect of the invention involves a method for manufacturing an ultra-thin polymeric film, comprising the steps of:
melting a polymeric composition in an extruder;
conveying the melted polymeric composition through a flat die;
stretching the melted polymeric composition using take-up rollers to form an ultra-thin polymeric film; and
cooling the ultra-thin polymeric film,
whereby the ultra-thin polymeric film has a thickness of less than 7 microns.

Another aspect of the invention involves a method for manufacturing an ultra-thin polymeric film, comprising the steps of:
melt blending a nanocomposite composition in an extruder;
conveying the melted nanocomposite composition through a flat die;
stretching the melted nanocomposite composition using take-up rollers to form an ultra-thin polymeric film; and
cooling the ultra-thin polymeric film,
whereby the ultra-thin polymeric film has a thickness of less than 7 microns.

In yet another aspect of the invention, a method for manufacturing an extrusion cast polymeric film, comprising the steps of:
extruding a polymeric composition;
conveying the polymeric composition through a flat die;
stretching the polymeric composition; and
cooling the polymeric composition to form an ultra-thin polymeric film,
whereby the ultra-thin polymeric film has a thickness of less than 7 microns.

### BRIEF DESCRIPTION OF THE DRAWINGS

FIG. 1 is a graph of dielectric breakdown strength (V/micron) as a function of film thickness using the method of the invention.

FIG. 2 is a graph of dielectric breakdown strength (V/micron) as a function of film thickness for a 2 micron thick film manufactured by using the method of the invention.

FIG. 3 is a graph of dielectric breakdown strength (kVDC/mm) as a function of film thickness for an extrusion cast film manufactured by using the method of the invention as compared to a conventional solvent cast film.

FIG. 4 is a graph of dielectric breakdown strength (VDC/micron) as a function of film thickness using electrostatic pinning and varying chilling roll temperature.

FIG. 5 is a graph of dielectric breakdown strength (VDC/micron) as a function of location (cm, across web) using the method of the invention as compared to a commercially available extrusion cast film web.

### DETAILED DESCRIPTION

It is to be noted that the terms "first," "second," and the like as used herein do not denote any order, quantity, or importance, but rather are used to distinguish one element from another. The terms "a" and "an" do not denote a limitation of quantity, but rather denote the presence of at least one of the referenced item. The modifier "about" used in connection with a quantity is inclusive of the stated value and has the meaning dictated by the context (e.g., includes the degree of error associated with measurement of the particular quantity). It is to be noted that all ranges disclosed within this specification are inclusive and are independently combinable.

Disclosed herein is a method for manufacturing an ultra-thin polymeric film. As used herein, the term "polymeric film" refers to a polymeric composition or a nanocomposite composition comprising a polymeric composition together with nanoparticles. As used herein, the term "ultra-thin" refers to a thickness of between about 1 micron and 10 microns.

The polymeric composition may comprise thermoplastic and/or thermoset polymers. In one embodiment, the polymeric composition comprises thermoplastic polymers that have a high glass transition temperature of greater than or equal to about 100°C. In one embodiment, it is desirable for the thermoplastic polymers to have a glass transition temperature of greater than or equal to about 150°C. In another embodiment, it is desirable for the thermoplastic polymers to have a glass transition temperature of greater than or equal to about 175°C. In yet another embodiment, it is desirable for the thermoplastic polymers to have a glass transition temperature of greater than or equal to about 200°C. In still yet another embodiment, it is desirable for the thermoplastic polymers to have a glass transition temperature of greater than or equal to about 225°C. In yet another embodiment, it is desirable for the thermoplastic polymers to have a glass transition temperature of greater than or equal to about 250°C.

Examples of thermoplastic and/or thermoset polymers that can be used in the polymeric composition include polyacetals, polyacrylics, polycarbonates, polyalkyds, polystyrenes, polyolefins, polyesters, polyamides, polyaramides, polyamideimides, polyarylates, polyurethanes, epoxies, phenolics, silicones, polyarylsulfones, polyethersulfones, polyphenylene sulfides, polysulfones, polyimides, polyetherimides, polytetrafluoroethylenes, polyetherketones, polyether etherketones, polyether ketone ketones, polybenzoxazoles, polyoxadiazoles, polybenzothiazinophenothiazines, polybenzothiazoles, polypyrazinoquinoxalines, polypyromellitimides, polyquinoxalines, polybenzimidazoles, polyoxindoles, polyoxoisoindolines, polydioxoisoindolines, polytriazines, polypyridazines, polypiperazines, polypyridines, polypiperidines, polytriazoles, polypyrazoles, polycarboranes, polyoxabicyclononanes, polydibenzofurans, polyphthalides, polyacetals, polyanhydrides, polyvinyl ethers, polyvinyl thioethers, polyvinyl alcohols, polyvinyl ketones, polyvinyl halides, polyvinyl nitriles, polyvinyl esters, polysulfonates, polysulfides, polythioesters, polysulfones, polysulfonamides, polyureas, polyphosphazenes, polysilazanes, polypropylenes, polyethylenes, polyethylene terephthalates, polyvinylidene fluorides, polysiloxanes, cyanoresins, or the like, or a combination comprising at least one of the foregoing thermoplastic polymers.

Other examples of thermoplastic and/or thermoset polymers that can be used in the polymeric composition include polyetherimide, fluorenyl polyester (FPE), polyvinylidene fluoride, polyvinylidine fluoride-trifluoroethylene P(VDF-TrFE), polyvinylidene-tetrafluoroethylene copolymers P(VDF-TFE), polyvinylidine trifluoroethylene hexafluoropropylene copolymers P(VDF-TFE-HFE) and polyvinylidine hexafluoropropylene copolymers P(VDF-HFE), epoxy, polypropylene, polyester, polyimide, polyarylate, polyphenylsulfone, polystyrene, polyethersulfone, polyamideimide, polyurethane, polycarbonate, polyetheretherketone, silicone, or the like, or a combination comprising at least one of the foregoing. Exemplary polymers are ULTEM®, a polyetherimide, or SILTEM®, a polyetherimide-polysiloxane copolymer, both commercially available from General Electric Plastics (GE Plastics). An exemplary Cyanoresin is commercially available from Shin-Etsu Chemical Co., Ltd. An exemplary polyetherimide of relatively high T_{g} is EXTEM®, available from GE Plastics.

More examples of thermoplastic and/or thermoset polymers that can be used in the polymeric composition are resins of epoxy/amine, epoxy/anhydride, isocyanate/amine, isocyanate/alcohol, unsaturated polyesters, vinyl esters, unsaturated polyester and vinyl ester blends, unsaturated polyester/urethane hybrid resins, polyurethane-ureas, reactive dicyclopentadiene (DCPD) resin, reactive polyamides, or the like, or a combination comprising at least one of the foregoing. An exemplary thermosetting polymer is thermosetting NORYL® (TSN NORYL®), a polyphenylene ether, commercially available from GE Plastics.

Other suitable thermosetting and/or thermoplastic polymers include polymers that can be made from an energy activatable thermosetting pre-polymer composition. Examples include polyurethanes such as urethane polyesters, silicone polymers, phenolic polymers, amino polymers, epoxy polymers, bismaleimides, polyimides, and furan polymers. The energy activatable thermosetting pre-polymer component can comprise a polymer precursor and a curing agent. The polymer precursor can be heat activatable, eliminating the need for a catalyst. The curing agent selected will not only determine the type of energy source needed to form the thermosetting polymer, but may also influence the resulting properties of the thermosetting polymer. Examples of curing agents include aliphatic amines, aromatic amines, acid anhydrides, or the like, or a combination comprising at least one of the foregoing. The energy activatable thermosetting pre-polymer composition may include a solvent or processing aid to lower the viscosity of the composition for ease of extrusion including higher throughputs and lower temperatures. The solvent could help retard the crosslinking reaction and could partially or totally evaporate during or after polymerization.

The polymeric composition may be selected from a wide variety of blends of thermoplastic polymers with thermoplastic polymers, or blends of thermoplastic polymers with thermosetting polymers. For example, the polymeric composition can comprise a homopolymer, a copolymer such as a star block copolymer, a graft copolymer, an alternating block copolymer or a random copolymer, ionomer, dendrimer, or a combination comprising at least one of the foregoing. The polymeric composition may also be a blend of polymers, copolymers, terpolymers, or the like, or a combination comprising at least one of the foregoing.

Other examples of blends of thermoplastic polymers with thermoset polymers include acrylonitrile-butadiene-styrene/nylon, polycarbonate/acrylonitrile-butadiene-styrene, polyphenylene ether/polystyrene, polyphenylene ether/polyamide, polycarbonate/polyester, polyphenylene ether/polyolefin, or the like, or a combination comprising at least one of the foregoing.

In one embodiment, the nanoparticles of the nanocomposite composition are inorganic oxides. The nanocomposite composition has a dielectric constant, breakdown voltage, energy density, corona resistance, and mechanical properties such as impact strength, tensile strength and ductility that are superior to a composition without the nanoparticles. The nanocomposite composition also has impact strength that is superior to a composition that comprises a polymeric composition and particles whose sizes are in the micrometer range instead of in the nanometer range. In one embodiment, the nanocomposite composition has a dielectric constant that is greater than that of the polymeric composition alone or greater than the composition that comprises a polymeric composition and particles whose sizes are in the micrometer range. The nanocomposite composition has a breakdown voltage of greater than or equal to about 300 V/micrometer. The nanocomposite composition advantageously has an energy density of about 1 J/cm³ to about 10 J/cm³. The nanocomposite composition has improved properties over the polymeric compositions without the nanoparticles. These improved properties include a higher dielectric constant, improved breakdown strength and corona resistance, improved impact strength and tensile strength.

In one embodiment, the inorganic oxide nanoparticles comprise silica. Examples of inorganic oxides include calcium oxide, silicon dioxide, or the like, or a combination comprising at least one of the foregoing. In one embodiment, the nanoparticles comprise metal oxides such as metal oxides of alkali earth metals, alkaline earth metals, transition metals, metalloids, poor metals, or the like, or a combination comprising at least one of the foregoing. In another embodiment, the nanosized metal oxides comprise perovskites and perovskite derivatives such as barium titanate, barium strontium titanate, and strontium-doped lanthanum manganate. In another embodiment, the nanosized metal oxides comprise a composition with a high dielectric constant such as calcium copper titanate (CaCu₃Ti₄O₁₂), cadmium copper titanate (CdCu₃Ti₄O₁₂), Ca₁₋ₓLaₓMnO₃, and (Li, Ti) doped NiO, or the like, or a combination comprising at least one of the foregoing. Suitable examples of metal oxides are, cerium oxide, magnesium oxide, titanium oxide, zinc oxide, silicon oxide (e.g., silica and/or fumed silica), copper oxide, aluminum oxide (e.g., alumina and/or fumed alumina), colloidal silicas dispersed in solvents as carriers, or the like, or a combination comprising at least one of the foregoing metal oxides.

Commercially available examples of nanosized inorganic oxides are NANOACTIVE^{™} calcium oxide, NANOACTIVE^{™} calcium oxide plus, NANOACTIVE^{™} cerium oxide, NANOACTIVE^{™} magnesium oxide, NANOACTIVE^{™} magnesium oxide plus, NANOACTIVE^{™} titanium oxide, NANOACTIVE^{™} zinc oxide, NANOACTIVE^{™} silicon oxide, NANOACTIVE^{™} copper oxide, NANOACTIVE^{™} aluminum oxide, NANOACTIVE^{™} aluminum oxide plus, all commercially available from NanoScale Materials Incorporated, and SNOWTEX^{™} commercially available from Nissan Chemical.

In another embodiment, the inorganic oxide nanoparticles comprise metal oxides such as alumina, ceria, titanate, zirconia, niobium pentoxide, tantalum pentoxide, or the like, or a combination comprising at least one of the foregoing. Examples of nanoparticles comprising inorganic oxides include aluminum oxide, calcium oxide, cerium oxide, copper oxide, magnesium oxide, niobium oxide, silicon oxide, tantalum oxide, titanium oxide, yttrium oxide, zinc oxide, and zirconium oxide.

In one embodiment, the inorganic oxide nanoparticles have particle sizes of less than or equal to about ten nanometers (10⁻⁹ meter range). In another embodiment, the inorganic oxide nanoparticles have particle sizes of greater than or equal to about ten nanometers. In another embodiment, the inorganic oxide nanoparticles are surface treated to enhance dispersion within the polymeric composition. For example, the surface treatment comprises coating the inorganic oxide nanoparticles with an organic material, such as a silane-coupling agent. Examples of suitable silane-coupling agents include tetramethylchlorosilane, hexadimethylenedisilazane, gamma-aminopropoxysilane, or the like, or a combination comprising at least one of the foregoing silane coupling agents. The silane-coupling agents generally enhance compatibility of the nanoparticles with the polymeric composition and improve dispersion of the nanoparticles within the polymeric composition. In another embodiment, the nanoparticles having particle sizes of less than or equal to about ten nanometers are not surface treated.

In another embodiment, the nanoparticles can be surface treated by coating with a polymer or a monomer such as, for example, surface coating in-situ, spray drying a dispersion of nanoparticle and polymer solution, co-polymerization on the nanoparticle surface, and melt spinning followed by milling. In the case of surface coating in-situ, the nanoparticles are suspended in a solvent, such as, for example demineralized water and the suspension's pH is measured. The pH can be adjusted and stabilized with small addition of acid (e.g., acetic acid or dilute nitric acid) or base (e.g., ammonium hydroxide or dilute sodium hydroxide). The pH adjustment produces a charged state on the surface of the nanoparticle. Once a desired pH has been achieved, a coating material (for example, a polymer or other appropriate precursor) with opposite charge is introduced into the solvent. The coating material is coupled around the nanoparticle to provide a coating layer around the nanoparticle. Once the coating layer has formed, the nanoparticle is removed from the solvent by drying, filtration, centrifugation, or another method appropriate for solid-liquid separation. This technique of coating a nanoparticle with another material using surface charge can be used for a variety of nanocomposite compositions.

When a solvent is used to apply a coating, as in the in-situ surface coating method described above, the polymeric composition can also be dissolved in the solvent before or during coating, and the final nanocomposite composition formed by removing the solvent.

In one embodiment, the polymeric composition is used in an amount of about 5 to about 99.999 wt% of the total weight of the nanocomposite composition. In another embodiment, the polymeric composition is used in an amount of about 10 wt% to about 99.99 wt% of the total weight of the nanocomposite composition. In another embodiment, the polymeric composition is used in an amount of about 30 wt% to about 99.5 wt% of the total weight of the nanocomposite composition. In another embodiment, the polymeric composition is used in an amount of about 50 wt% to about 99.3 wt% of the total weight of the nanocomposite composition.

As noted above, the nanoparticles have at least one dimension in the nanometer range. It is generally desirable for the nanoparticles to have an average largest dimension that is less than or equal to about 500 nm. The dimension may be a diameter, edge of a face, length, or the like. The nanoparticles may have shapes whose dimensionalities are defined by integers, e.g., the nanoparticles are either 1, 2 or 3-dimensional in shape. They may also have shapes whose dimensionalities are not defined by integers (e.g., they may exist in the form of fractals). The nanoparticles may exist in the form of spheres, flakes, fibers, whiskers, or the like, or a combination comprising at least one of the foregoing forms. These nanoparticles may have cross-sectional geometries that may be circular, ellipsoidal, triangular, rectangular, polygonal, or a combination comprising at least one of the foregoing geometries. The nanoparticles, as commercially available, may exist in the form of aggregates or agglomerates prior to incorporation into the polymeric composition or even after incorporation into the polymeric composition. An aggregate comprises more than one nanoparticle in physical contact with one another, while an agglomerate comprises more than one aggregate in physical contact with one another.

Regardless of the exact size, shape and composition of the nanoparticles, they may be dispersed into the polymeric composition at loadings of about 0.0001 to about 50 wt% of the total weight of the nanocomposite composition when desired. In one embodiment, the nanoparticles are present in an amount of greater than or equal to about 1 wt% of the total weight of the nanocomposite composition. In another embodiment, the nanoparticles are present in an amount of greater than or equal to about 1.5 wt% of the total weight of the nanocomposite composition. In another embodiment, the nanoparticles are present in an amount of greater than or equal to about 2 wt% of the total weight of the nanocomposite composition. In one embodiment, the nanoparticles are present in an amount of less than or equal to 40 wt% of the total weight of the nanocomposite composition. In another embodiment, the nanoparticles are present in an amount of less than or equal to about 30 wt% of the total weight of the nanocomposite composition. In another embodiment, the nanoparticles are present in an amount of less than or equal to about 25 wt% of the total weight of the nanocomposite composition.

A nanocomposite composition comprising a polymeric composition and nanoparticles has advantages over the polymeric composition alone or other commercially available compositions that comprise a polymeric composition and particles having particle sizes in the micrometer range. In one embodiment, the nanocomposite composition has a dielectric constant that is at least 50% greater than a composition comprising polymeric composition alone. In another embodiment, the nanocomposite composition has a dielectric constant that is at least 75% greater than the polymeric composition alone. In another embodiment, the nanocomposite composition has a dielectric constant that is at least 100% greater than the polymeric composition alone.

The nanocomposite composition also has a breakdown voltage that is advantageously greater than the polymeric composition alone or other commercially available compositions that comprise a polymeric composition and particles having particle sizes in the micrometer range. In one embodiment, the nanocomposite composition has a breakdown voltage that is at least 300 Volts/micrometer (V/micrometer). The breakdown is generally determined in terms of the thickness of the nanocomposite composition. In another embodiment, the nanocomposite composition has a breakdown voltage that is at least 400 V/micrometer. In another embodiment, the nanocomposite composition has a breakdown voltage that is at least 500 V/micrometer.

The nanocomposite composition also has a corona resistance that is advantageously greater than the polymeric composition alone or other commercially available compositions that comprise a polymeric composition and particles having particle sizes in the micrometer range. In one embodiment, the nanocomposite composition has a corona resistance that is resistant to a current of about 1000 volts to 5000 volts applied for about 200 hours to about 2000 hours. In another embodiment, the nanocomposite composition has a corona resistance that is resistant to a current of about 1000 volts to 5000 volts applied for about 250 hours to about 1000 hours. In yet another embodiment, the nanocomposite composition has a corona resistance that is resistant to a current of about 1000 volts to 5000 volts applied for about 500 hours to about 900 hours.

In another embodiment, the nanocomposite composition also has an impact strength of greater than or equal to about 5 kiloJoules per square meter (kJ/m²). In another embodiment, the nanocomposite composition has an impact strength of greater than or equal to about 10 kJ/m². In another embodiment, the nanocomposite composition has an impact strength of greater than or equal to about 15 kJ/m². In another embodiment, the nanocomposite composition has an impact strength of greater than or equal to about 20 kJ/m².

A method for manufacturing the polymeric composition or the nanocomposite composition into an ultra-thin polymeric film will now be described. In general, the method involves melt blending of the composition in an extruder. Melt blending of the composition involves the use of shear force, extensional force, compressive force, ultrasonic energy, electromagnetic energy, thermal energy or a combination comprising at least one of the foregoing forces or forms of energy and is conducted in processing equipment wherein the aforementioned forces are exerted by a single screw, multiple screws, intermeshing co-rotating or counter rotating screws, non-intermeshing co-rotating or counter rotating screws, reciprocating screws, screws with pins, barrels with pins, rolls, rams, helical rotors, or a combination comprising at least one of the foregoing.

Melt blending involving the aforementioned forces may be conducted in machines such as, but not limited to, single or multiple screw extruders, Buss kneader, Henschel, helicones, Ross mixer, Banbury, roll mills, molding machines, such as injection molding machines, vacuum forming machines, blow molding machine, or the like, or a combination comprising at least one of the foregoing machines. The extrusion process is designed to provide an environment for the composition that does not lead to excessive temperatures that can cause the thermal or mechanical degradation of the composition.

It is generally desirable during melting of the composition to impart a specific energy of about 0.01 to about 10 kilowatt-hour/kilogram (kwhr/kg) of the composition. Within this range, a specific energy of greater than or equal to about 0.05, preferably greater than or equal to about 0.08, and more preferably greater than or equal to about 0.09 kwhr/kg is generally desirable for blending the composition. Also desirable is an amount of specific energy less than or equal to about 9, preferably less than or equal to about 8, and more preferably less than or equal to about 7 kwhr/kg for blending the nanocomposite composition.

In one embodiment, the polymeric composition in powder form, pellet form, sheet form, or the like, may be first dry blended with the nanoparticles and other optional fillers if desired in a Henschel or a roll mill, prior to being fed into a melt blending device, such as an extruder or Buss kneader. In another embodiment, the nanoparticles are introduced into the melt blending device in the form of a masterbatch. In such a process, the masterbatch may be introduced into the melt blending device downstream of the polymeric composition.

When a masterbatch is used, the nanoparticles may be present in the masterbatch in an amount of about 1 to about 50 wt%, of the total weight of the masterbatch. In one embodiment, the nanoparticles are used in an amount of greater than or equal to about 1.5 wt% of the total weight of the masterbatch. In another embodiment, the nanoparticles are used in an amount of greater or equal to about 2wt%, of the total weight of the masterbatch. In another embodiment, the nanoparticles are used in an amount of greater than or equal to about 2.5 wt%, of the total weight of the masterbatch. In one embodiment, the nanoparticles are used in an amount of less than or equal to about 30 wt%, of the total weight of the masterbatch. In another embodiment, the nanoparticles are used in an amount of less than or equal to about 10 wt%, of the total weight of the masterbatch. In another embodiment, the nanoparticles are used in an amount of less than or equal to about 5 wt%, of the total weight of the masterbatch. Examples of polymeric compositions that may be used in masterbatches are polypropylene, polyetherimides, polyamides, polyesters, or the like, or a combination comprising at least on of the foregoing polymeric compositions.

In another embodiment relating to the use of masterbatches in polymeric blends, it is sometimes desirable to have the masterbatch comprising a polymeric composition that is the same as the polymeric composition that forms the continuous phase of the nanocomposite composition. In yet another embodiment relating to the use of masterbatches in polymeric blends, it may be desirable to have the masterbatch comprising a polymeric composition that is different in chemistry from other the polymers that are used in the nanocomposite composition. In this case, the polymeric composition of the masterbatch will form the continuous phase in the blend.

Next, the molten composition is conveyed through a flat die with a small die lip gap. In one embodiment, the die lip gap is between about 100 microns to about 500 microns. In one embodiment, a melt pump may also be used to deliver a constant, uniform, non-pulsating flow of the melted composition to the flat die. In another embodiment, the melted composition is passed through a filtration device to remove contaminants, such as gels, black specks, and the like, that could adversely affect the dielectric performance of the film. Next, the film is stretched by passing the film through take-up rollers at relatively high take-up speeds. In one embodiment, the take-up rollers may operate at speeds of up to 200 m/min. Then, the composition is cooled to form a film or sheet. Then, the edges of the film may be trimmed, and the film wound up on a roll using a tension-controlled winding mechanism. In another embodiment, a heated roll may be used to temper/anneal the film, thereby eliminating frozen-in internal stresses. The compounding of the optional desired fillers into the polymeric matrix to obtain a uniform dispersion can be done on a separate extruder or on the same extruder used to effect the melting of the composition prior of the stretching operation. Using the method of the invention, ultra-thin thins were produced in the range between about 1 micron and about 12 micron, and preferably in the range between about 1 micron and about 5 micron, and most preferably in the range between about 1 micron and about 3 micron.

EXAMPLES

The following examples are set forth to provide those of ordinary skill in the art with a detailed description of how the methods claimed herein are evaluated, and are not intended to limit the scope of what the inventors regard as their invention. Unless indicated otherwise, parts are by weight, temperature is in degree Centigrade.

EXAMPLE 1

The method of the invention was tested using a polymeric composition comprising ULTEM® commercially available from General Electric Plastics. The polymeric composition was fed at a rate between about 1-5 lb/hr through a 30mm diameter (L/D=30) single-screw extruder having a barrel temperature between about 330-370 degree C, a die plate temperature between about 380-390 degree C, and a melt temperature between about 355-360 degree C. The die pressures of the extruder were between about 90-120 bar, and the screw speeds were between about 6-9 rpm. The flow rate of the polymeric composition can be adjusted by varying the screw speed and die pressure. Next, the extruded polymeric composition was conveyed through a three-heating zone, 10 inch wide film die having a die-lip gap of about 200 microns. Then, the polymeric composition was fed onto a 350mm wide chill-roll winder at a take-up speed of between about 9-16 m/min. A summary of the sample conditions are given in Tables I, II and III.

**TABLE I**

| SUMMARY OF CONDITIONS |
|---|
| EXTRUDER (typical conditions): |
| Barrel T (°C): 330, 350, 360, 370, 350, 370, 370 |
| Die plate T (°C): 390, 380, 390 |
| Melt T (°C): 355-360 |
| Die Pressure (bar): 90-120 |
| Screw speed (rpm): 6-9 |
| Screen pack: 20/50/100/200 mesh size (841/297/149/74 microns) |
| Polymer rate: approximately 1-5 lb/hr |
| FILM DIE: |
| Die-lip gap (micron): 200 |
| Three heating zones |
| CHILL ROLL: |
| Cooling roll: Ground (matte), and chromium-plated (polished) finish |
| No tempering roll was used |
| WINDER: |
| Take-up speed (m/min): 6-16 |
| CAMERA: |
| Optical system checked film for contaminants (gels, fish eyes, black specks). |

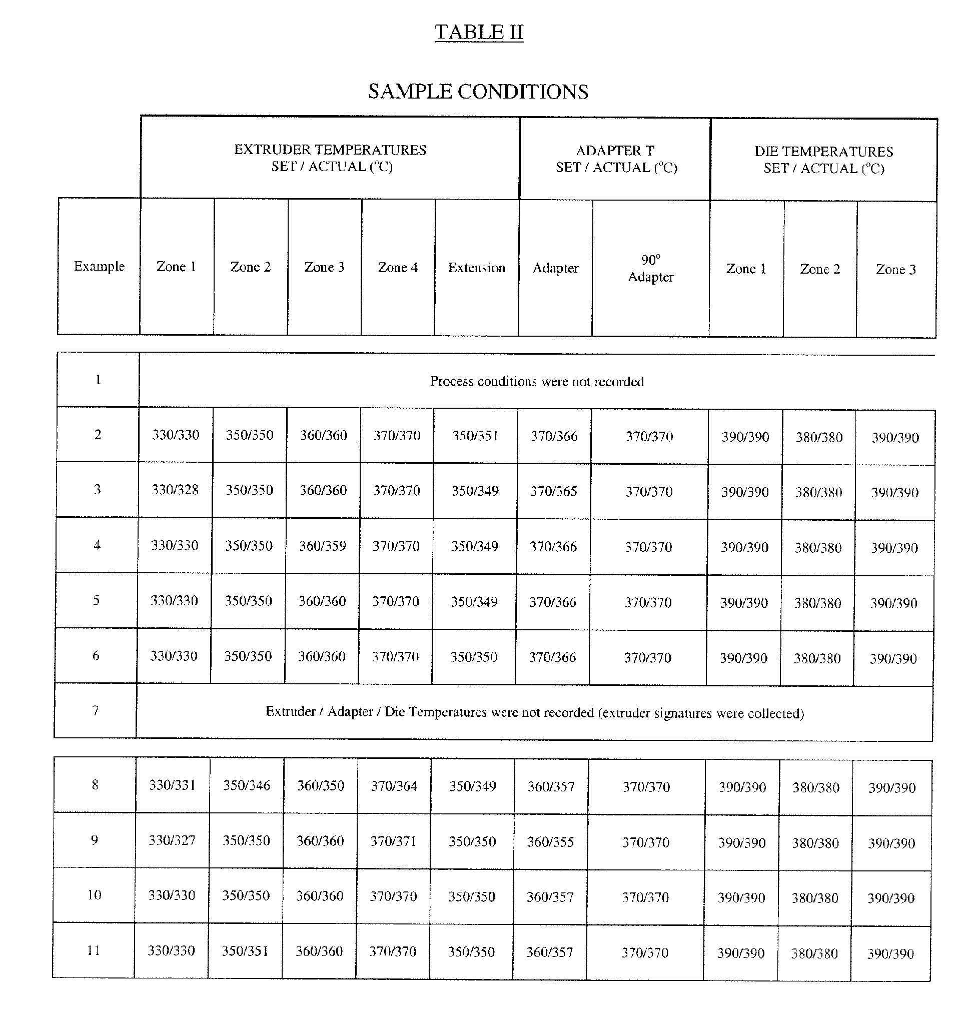

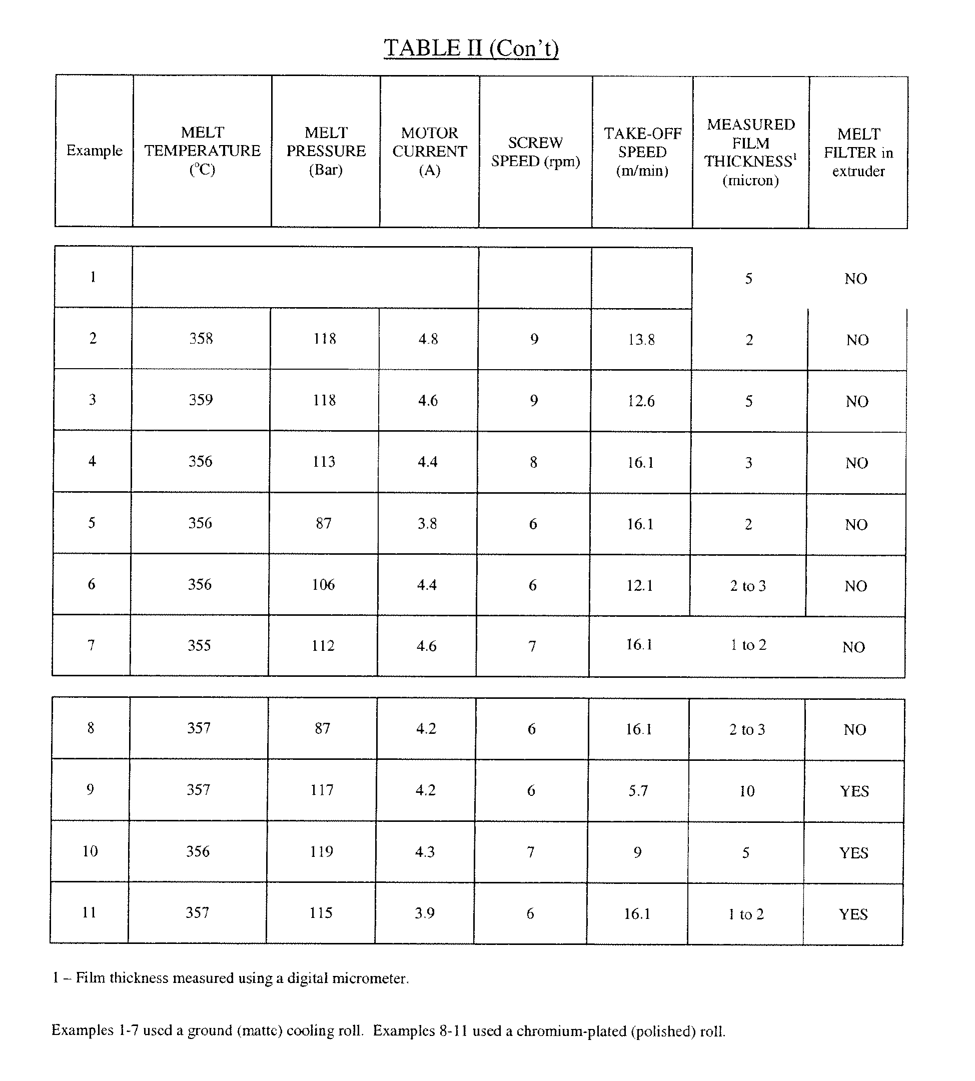

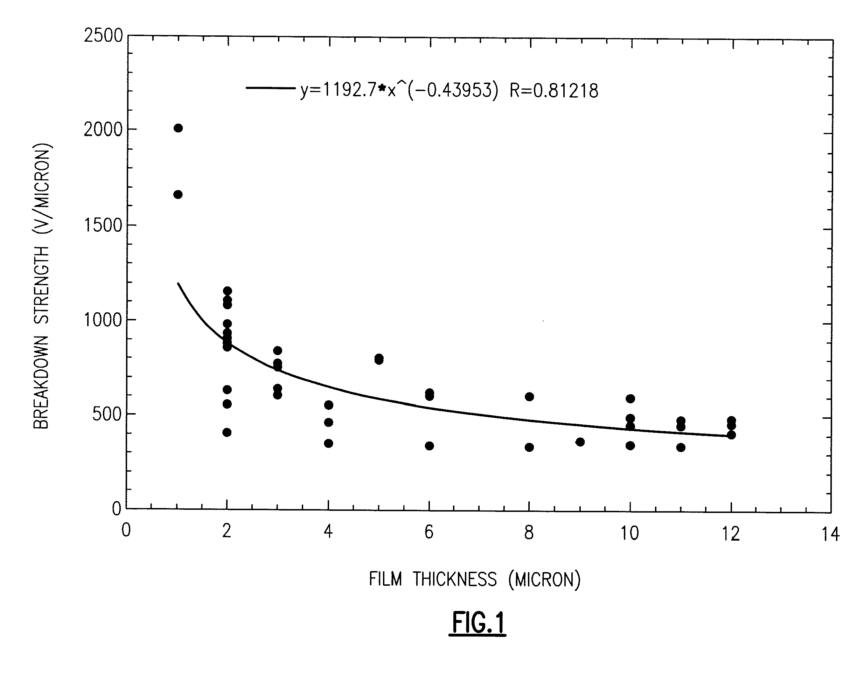

The dielectric breakdown strength as a function of film thickness ranging between about 1 micron and 12 micron for the ultra-thin ULTEM® film is shown in FIG. 1. The results shown in FIG. 1 demonstrate that there is very little increase in dielectric breakdown strength as the film thickness decreases from about 12 micron to about 5 micron. However, the results also demonstrate that the dielectric breakdown strength of the film significantly increases as the thickness decreases from about 5 micron to about 1 micron. This significant increase in dielectric breakdown strength in the range between about 1 micron and 5 micron demonstrates a great incentive to produce an ultra-thin film with a thickness in the range between about 1 micron and about 5 micron by using the method of the invention. The surprisingly high values of breakdown strength measured on sections of the film with a thickness of 1 micron may be partly due to the error associated with measuring the film thickness for this relatively thin sample. In summary, the results using the method of the invention indicate that the dielectric breakdown strength varies approximately with the inverse of the square root of the film thickness.

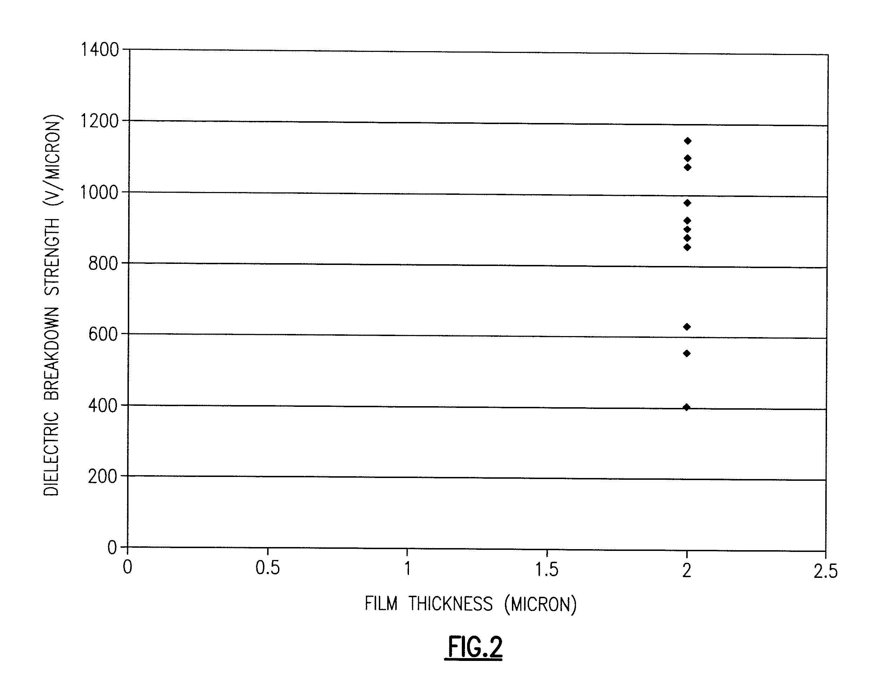

As shown in FIG. 2, the dielectric breakdown strength for the ultra-thin ULTEM® film having a thickness of about 2 micron (Example 11 in Table II) using the method of the invention ranged between about 400 (V/micron) to about 1200 (V/micron). The different values of breakdown strength measured on samples of the same nominal thickness may be due, among other factors, to technique error, localized differences in the surface finish of the sample, roughness differences, and possibly the presence of trace contaminants. Overall, these results indicate that the dielectric breakdown strength was increased significantly by using the method of the invention as compared to conventional films having greater film thickness.

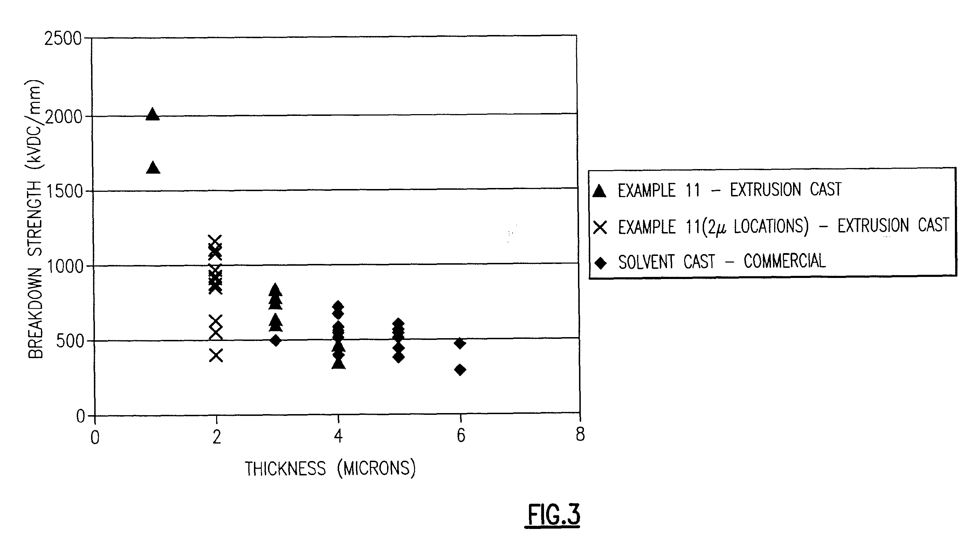

Referring now to FIG. 3, a graph of dielectric breakdown strength for the ultra-thin ULTEM® film having a thickness of about 2 micron (Example 11 in Table II) using the method of the invention ranged between about 400 (V/micron) to about 1200 (V/micron). The mean dielectric breakdown strength of Example 11 was 872 (V/micron). FIG. 3 also shows that a commercially available solvent cast film having a nominal thickness of about 3 micron has a mean dielectric breakdown strength of about 525 (V/micron). Therefore, the extrusion cast film using the method of the invention produces similar, if not better, dielectric performance as the commercially available solvent cast film.

In addition, the purchase price of the commercially available solvent cast film is about $1000/lb. The purchase price of a commercially available extrusion cast film is about $70/lb, which is about 15 times less expensive than the commercially available solvent cast film. Therefore, the commercially available extrusion cast film provides significant cost savings when compared to commercially available solvent cast films.

The effect of using a filtration device in conjunction with the extruder to remove contaminants from the polymer melt for various film thicknesses was studied. The amount of contaminants was determined using inductively coupled plasma spectroscopy. The summary of the results are given in Table III.

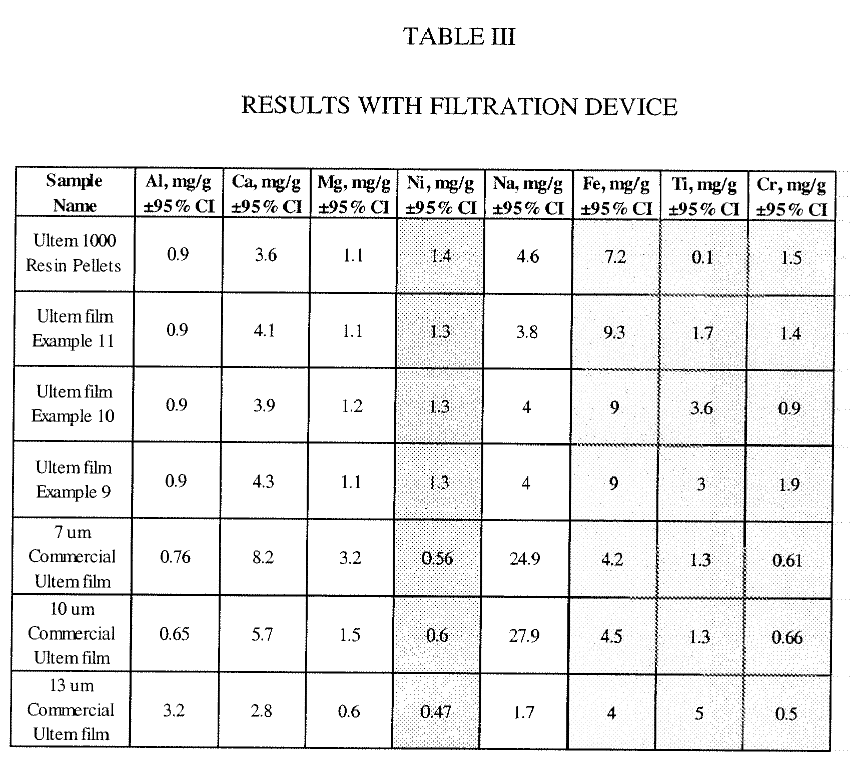

As shown in Table III, the amount of contaminants in the ultra-thin polymer film using the method of the invention is comparable to amounts found in commercially available extruder-made ULTEM® films.

Another test was conducted similar to the test described above, except for the following modifications:
- single-screw extruder with high-heat capability;
- the extruder was 20mm in diameter which provided flow control through higher screw speeds;
- the film die included a high-heat coating on the surface for better film release;
- the film die included additional heating zones for better melt temperature uniformity and film thickness control;
- ceramic knives to trim film edges;
- chilling roll had a special high-temperature coating on the surface; and
- electrostatic pinning device to fix the film to the chilling roll for improved film flatness.

The sample conditions are summarized in Table IV below.

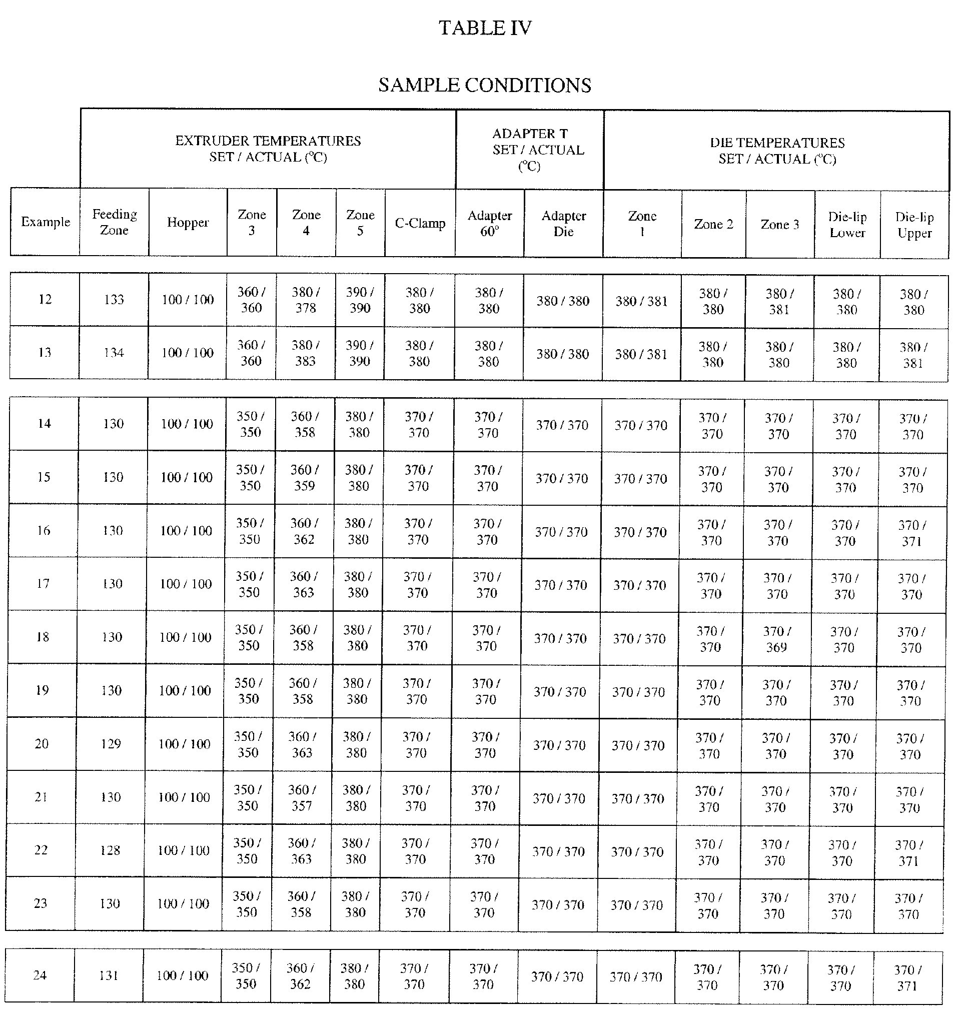

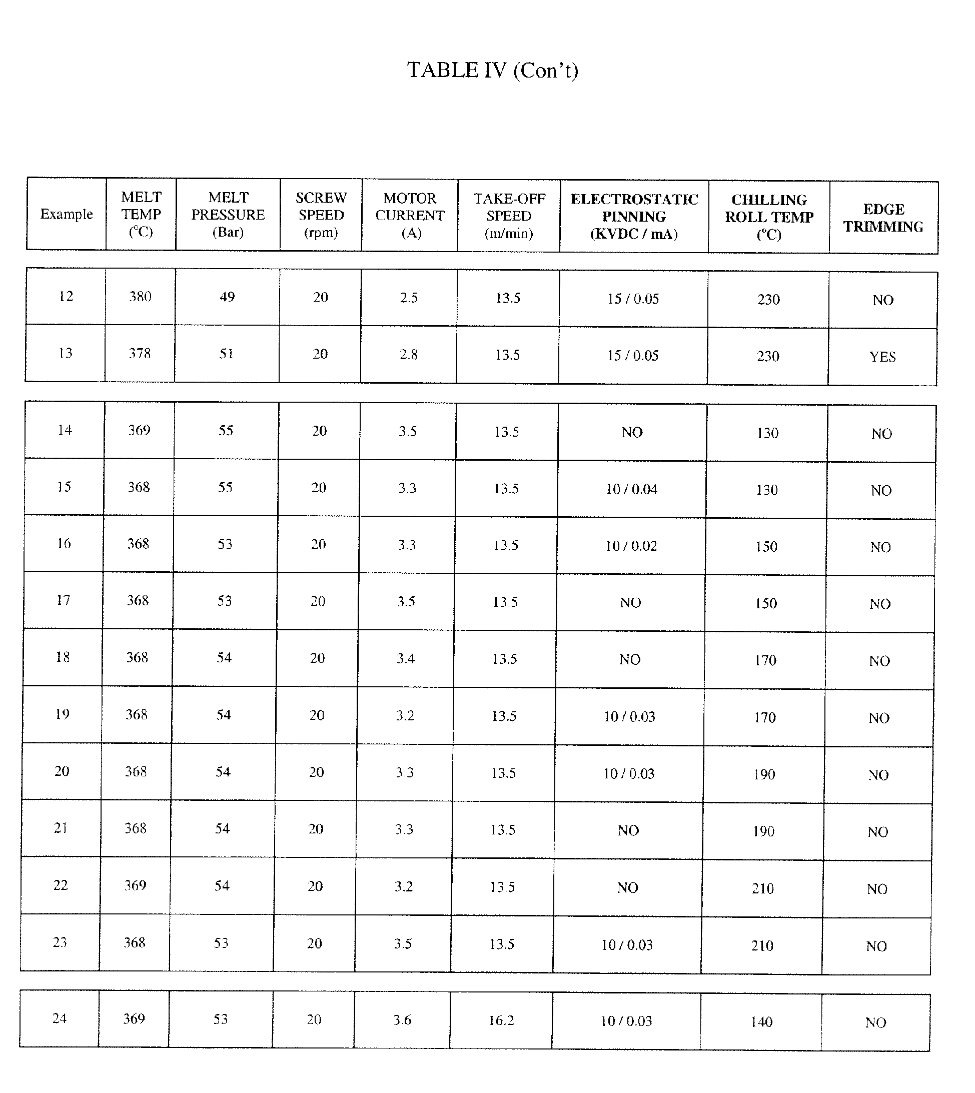

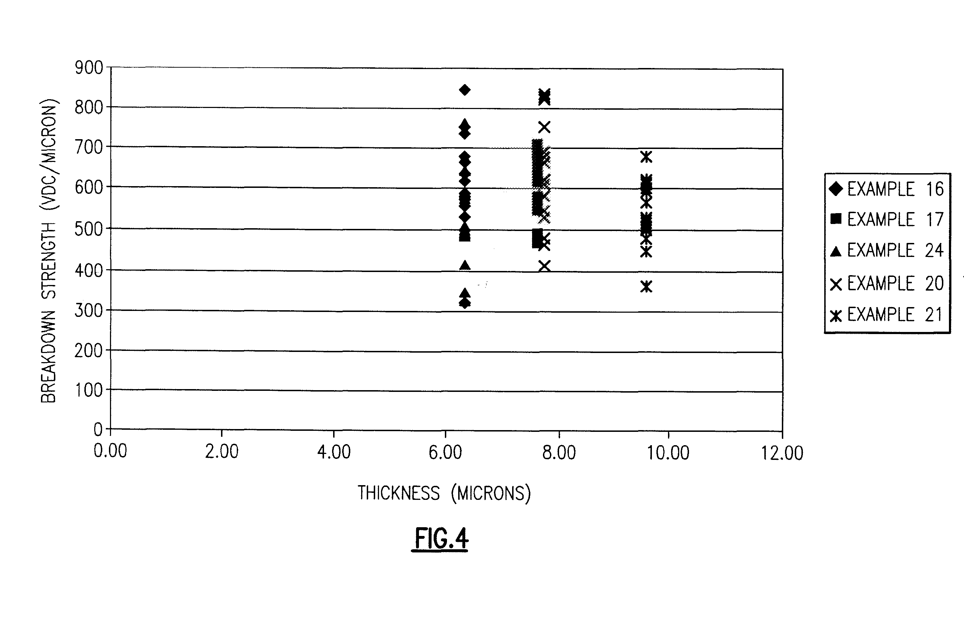

The electrostatic pinning device uses a wire conducting a high voltage, but low current to produce an electrostatic charge in the film web as it passes proximate to the wire prior to the take-up roll. The results indicated that the use of the electrostatic pinning device produced an ultra-thin polymer film that was flat with a minimum of wrinkles or surface waviness. Figure 4 shows the high breakdown strength measured in these films.

Table V demonstrates that the method of the invention can produce films of about 5 microns in thickness with a relatively small standard deviation from the mean value. These film thicknesses were obtained using a relatively accurate capacitance-based technique, which produced a standard deviation of about 0.70 microns when 12 measurements at different locations were taken.

**TABLE V**

| **Example 24** | | |
|---|---|---|
| **Location** | **Capacitance (pF)** | **Thickness (m)** |
| 1 | 5.3078 | 4.95235E-06 |
| 2 | 5.3083 | 5.21528E-06 |
| 3 | 5.3071 | 4.58416E-06 |
| 4 | 5.3064 | 4.21588E-06 |
| 5 | 5.3080 | 5.05753E-06 |
| 6 | 5.3085 | 5.32044E-06 |
| 7 | 5.3083 | 5.21528E-06 |
| 8 | 5.3060 | 4.00539E-06 |
| 9 | 5.3053 | 3.63695E-06 |
| 10 | 5.3083 | 5.21528E-06 |
| 11 | 5.3098 | 6.00378E-06 |
| 12 | 5.3093 | 5.741 E-06 |

| | | |
|---|---|---|
| **Mean (microns) = 4.93** **StDev (microns) = 0.70** | | |

Table VI demonstrates that the method of the invention can be operated without interruption to make films of relatively small thicknesses and lengths that can exceed 1000 meters.

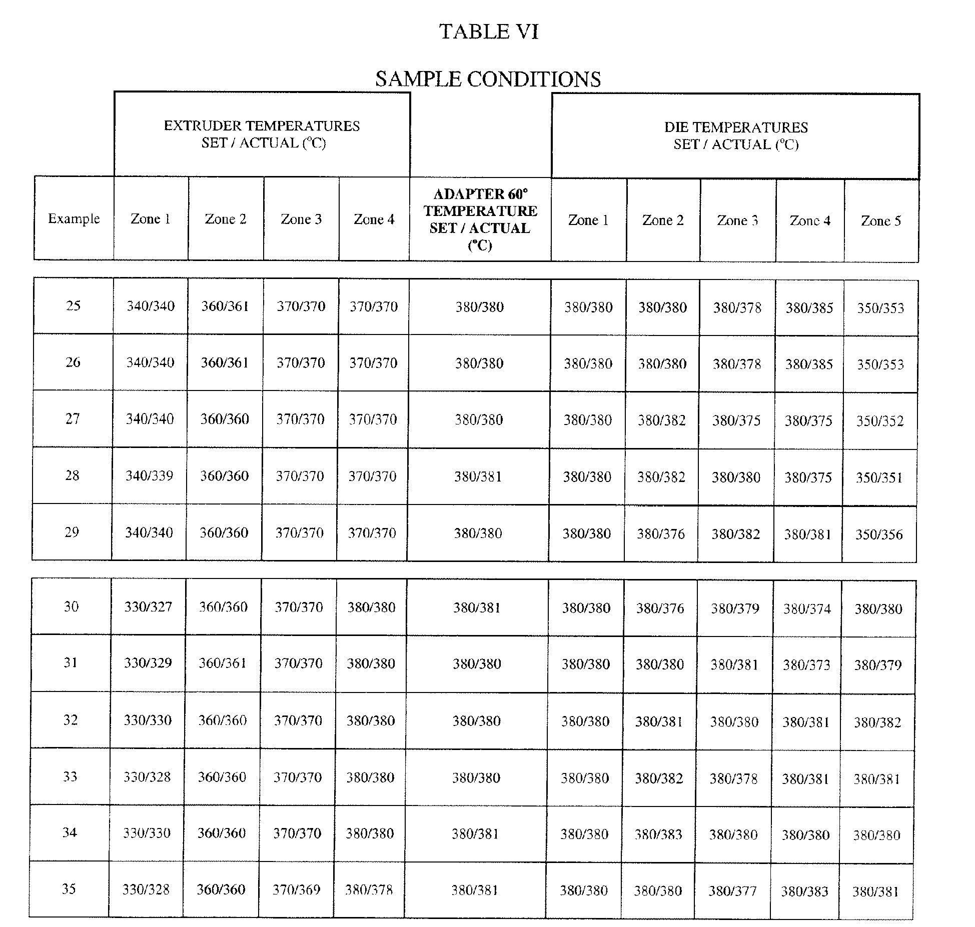

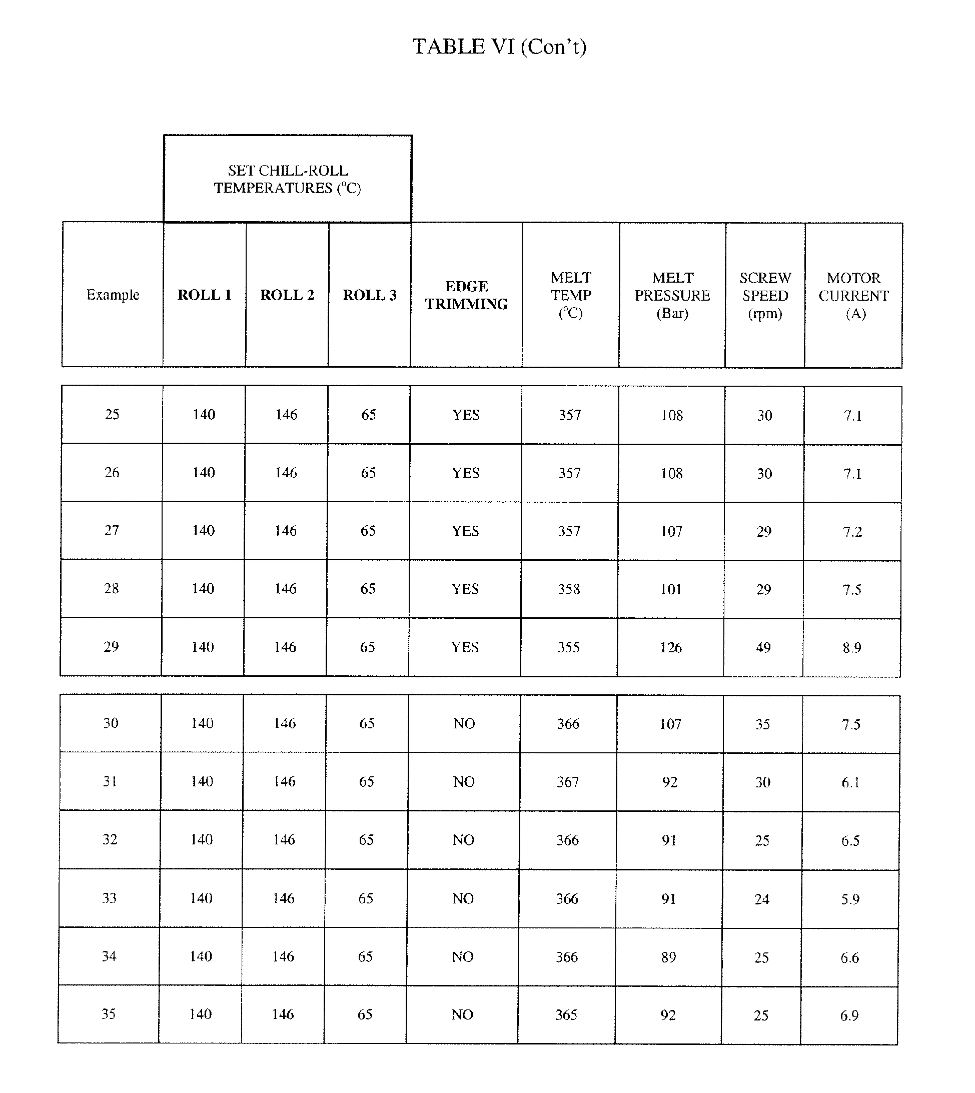

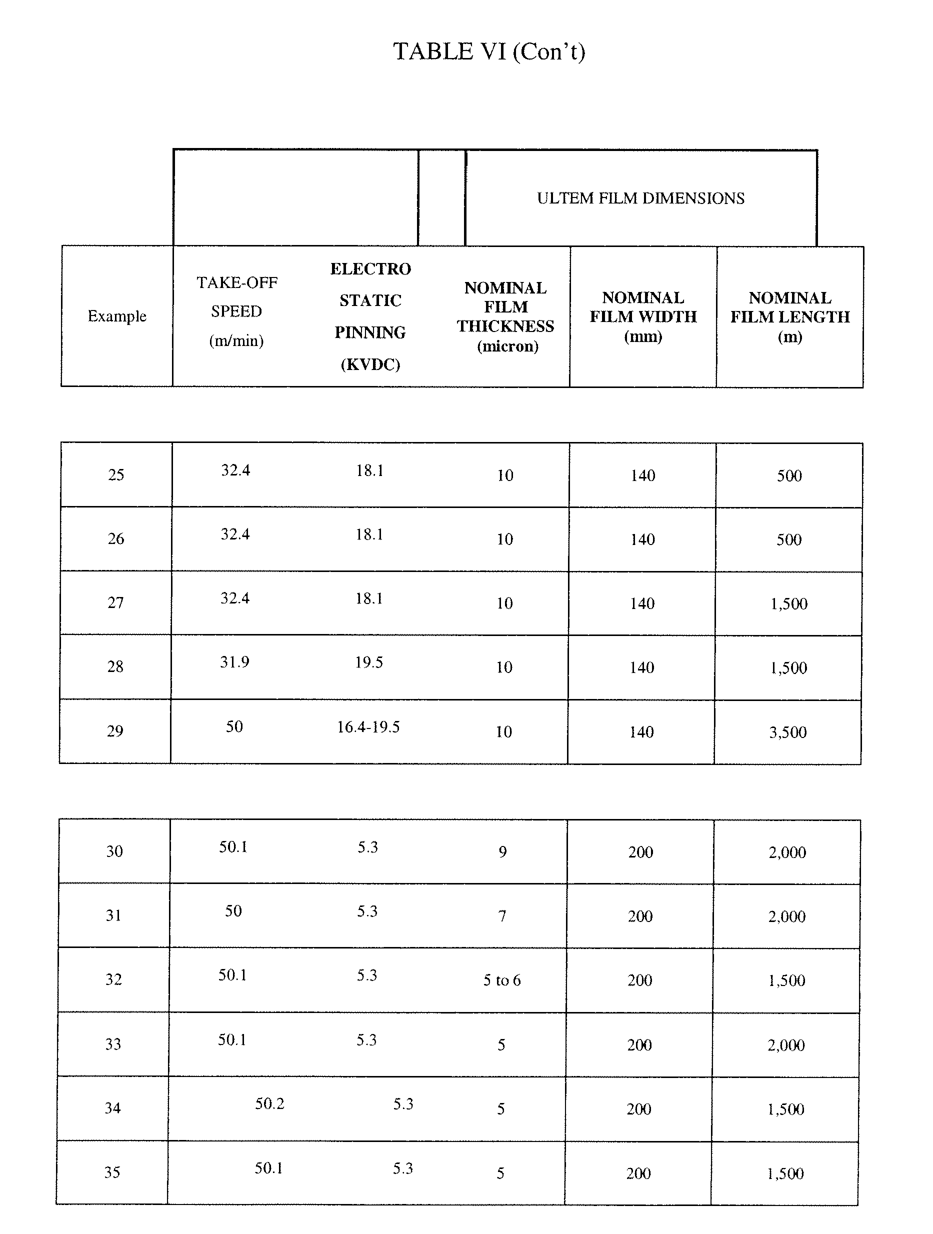

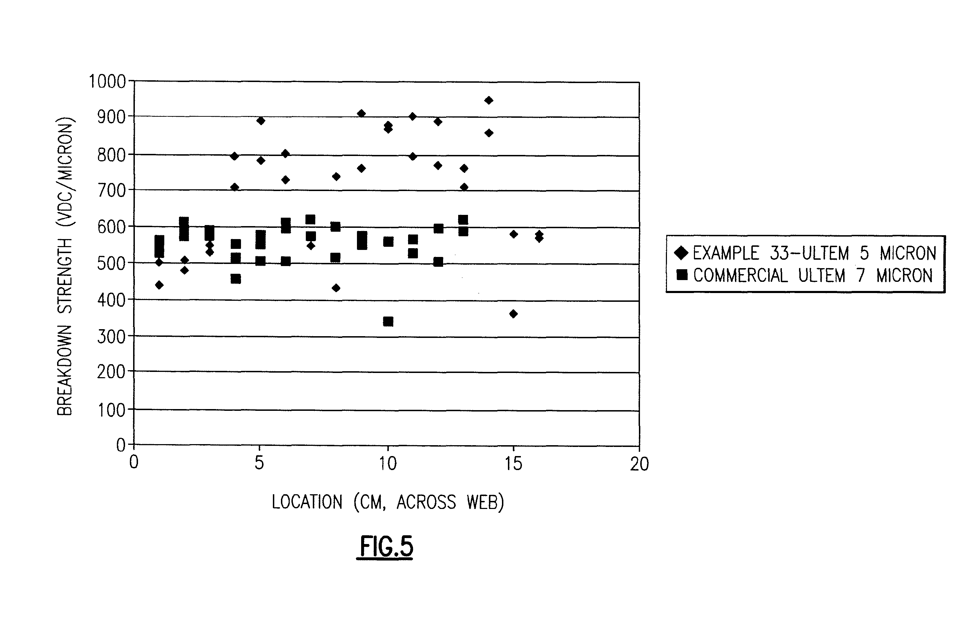

As shown in FIG. 5, the dielectric breakdown strength (VDC/micron) as a function of location across the web for a film with a thickness of 5 microns manufactured by using the method of the invention is substantially uniform as compared to a conventional film web having a thickness of 7 microns. FIG. 5 also illustrates that the film with the 5 micron thickness has a higher dielectric strength as compared to the commercially available film having the greater thickness of 7 microns.

The tests described above using the method of the invention demonstrate that an ultra-thin film (between about 1 micron and about 10 microns in thickness) can be produced having uniform thickness across the web, flat with no wrinkles or surface waviness, and free of contamination. Films produced by the method of the invention and tested for dielectric breakdown strength showed same or superior performance as compared to commercially available films of larger thickness. Using the method of the invention, biaxial stretching of the melted composition is not required; however, the method of the invention allows for biaxial stretching of the melted composition, if necessary.

As described above, the method of the invention is one-step, scalable to larger size equipment, and does not require the use of any solvent. As a result, the ultra-thin polymeric films can be produced at significant cost savings as compared to conventional techniques. The ultra-thin polymeric film produced by the method of the invention can advantageously be used in electronic components, such as batteries, spark plug caps, capacitors, speaker diaphragms, defibrillators, or other articles.

Although this invention has been described by way of specific embodiments and examples, it should be understood that various modifications, adaptations, and alternatives may occur to one skilled in the art, without departing from the spirit and scope of the claimed inventive concept. All of the patents, articles, and texts mentioned above are incorporated herein by reference.

## Claims

1. A method for manufacturing an ultra-thin polymeric film, comprising the steps of:
melting a polymeric composition in an extruder;
conveying the melted polymeric composition through a flat die;
stretching the melted polymeric composition using take-up rollers to form an ultra-thin polymeric film; and
cooling the ultra-thin polymeric film,
whereby the ultra-thin polymeric film has a thickness of less than 7 microns.

2. The method of Claim 1, wherein the polymeric composition comprises a thermoplastic polymer.

3. The method of Claim 1, wherein the polymeric composition comprises a thermosetting polymer.

4. A method for manufacturing an ultra-thin polymeric film, comprising the steps of:
melt blending a nanocomposite composition in an extruder;
conveying the melted nanocomposite composition through a flat die;
stretching the melted nanocomposite composition using take-up rollers to form an ultra-thin polymeric film; and
cooling the ultra-thin polymeric film,
whereby the ultra-thin polymeric film has a thickness of less than 7 microns.

5. The method of Claim 4, further comprising the step of blending a polymeric composition with nanoparticles to form the nanocomposite composition.

6. The method of Claim 5, wherein the nanoparticles comprise an inorganic oxide, and wherein the inorganic oxide is selected from the group consisting of aluminum oxide, magnesium oxide, calcium oxide, cerium oxide, copper oxide, silicon oxide, tantalum oxide, titanium oxide, niobium oxide, yttrium oxide, zinc oxide, zirconium oxide, perovskites and perovskite derivatives, barium titanate, barium strontium titanate, strontium-doped lanthanum manganate, calcium copper titanate, cadmium copper titanate, compounds having the formula Ca₁₋ₓLaₓMnO₃, lithium, titanium doped nickel oxide, colloidal silicas, or any combination thereof.

7. The method of Claim 5 or Claim 6, wherein the nanoparticles comprise a metal oxide, and wherein the metal oxide is selected from the group consisting of alkali earth metals, alkaline earth metals, transition metals, metalloids, poor metals, perovskites and perovskite derivatives, calcium copper titanate (CaCu₃Ti₄O₁₂), cadmium copper titanate (CdCu₃Ti₄O₁₂), Ca₁₋ₓLaₓMnO₃, and (Li, Ti) doped NiO, or any combination thereof.

8. The method of any one of the preceding Claims, further comprising the step of delivering a constant and uniform flow of the melted composition to the flat die using a melt pump.

9. The method of any one of the preceding Claims, further comprising the step of filtering the melted polymeric composition using a filtration device.

10. The method of any one of the preceding Claims, further comprising the step of trimming the ultra-thin polymeric film.

11. The method of any one of the preceding Claims, further comprising the step of winding the ultra-thin polymeric film on a roll.

12. The method of any one of the preceding Claims, wherein the flat die has a die lip gap between about 100 microns to about 500 microns.

13. The method of any one of the preceding Claims, wherein the take-up rollers operate at a speed of up to 200 m/min.
